(19) Europäisches Patentamt
European Patent Office
Office européen des brevets

(11) Veröffentlichungsnummer: **0 320 838**
**A2**

# (12) EUROPÄISCHE PATENTANMELDUNG

(21) Anmeldenummer: **88120697.3**

(22) Anmeldetag: **10.12.88**

(51) Int. Cl.4: **C08L 67/06 , C08K 5/16**

(30) Priorität: **17.12.87 DE 3742832**

(43) Veröffentlichungstag der Anmeldung:
**21.06.89 Patentblatt 89/25**

(84) Benannte Vertragsstaaten:
**DE ES FR GB IT NL**

(71) Anmelder: **BASF Aktiengesellschaft**
**Carl-Bosch-Strasse 38**
**D-6700 Ludwigshafen(DE)**

(72) Erfinder: **Holoch, Jan, Dr.**
**Koenigsberger Strasse 22 a**
**D-6906 Leimen(DE)**
Erfinder: **Peter, Roland, Dr.**
**Pfalzring 92**
**D-6704 Mutterstadt(DE)**
Erfinder: **Hornikel, Theodor**
**Am Kraenzenberg 10**
**D-6148 Heppenheim(DE)**
Erfinder: **Bueltjer, Uwe, Dr.**
**Dagobertstrasse 8**
**D-6700 Ludwigshafen(DE)**

## (54) Up-Harzformmassen mit verringerter Styrolemission.

(57) Die-Erfindung betrifft ungesättigte Polyesterharz-Formassen mit verringerter Styrolemission, enthaltend

A) einen ungesättigten Polyester mit Dihydrodicyclopentadienylendgruppen,

B) das Umsetzungsprodukt aus zwei Molen Hydroxialkyl(meth)acrylat und einem Mol Diisocyanat, und

C) Styrol.

EP 0 320 838 A2

## UP-Harzformmassen mit verringerter Styrolemission

Ungesättigte Polyesterharze werden im großen Maßstab zur Herstellung von großflächigen Bauteilen und bei der Produktion von Behältern eingesetzt. Als Verarbeitungsverfahren kommen zum Beispiel das Handlaminieren, das Faserspritzen sowie Wickelverfahren in Frage. Problematisch ist dabei die Styrolemission der Harze, da nach neueren Untersuchungen gesundheitliche Risiken beim häufigen Aufenthalt in styrolhaltiger Atmosphäre nicht auszuschließen sind. Bisher wurde die Styrolemission durch Zusatz von Paraffinen reduziert. Paraffin bildet auf der Oberfläche der Formteile einen Film, der das Entweichen von Styrol verhindert. Diese Methode hat jedoch zwei Nachteile: Erstens wird durch den Paraffinzusatz die interlaminare Scherfestigkeit herabgesetzt; zweitens wird das Paraffin erst dann wirksam, wenn das Harz zur Ruhe gekommen ist, also noch nicht während des Laminierens und Spritzens.

Eine naheliegende Methode zur Reduzierung der Styrolemission ist, den Styrolgehalt der Harze zu verringern. Hierbei treten aber zwei Probleme auf: Die Viskosität steigt auf ein so hohes Niveau an, daß die Verarbeitung schwierig wird; außerdem werden Verstärkungsfasern nur schlecht benetzt. Eine Möglichkeit, auch bei niedrigen Styrolgehalten akzeptable Viskositäten zu erhalten, ist der Einsatz von niedermolekularen Harzen. Dabei hat sich gezeigt, daß bei Harzen, die Dihydrodicyclopentadienylendgruppen enthalten, die Styrolemission im Vergleich zu Standardharzen bei gleicher Viskosität um bis zu 70% reduziert ist. Unbefriedigend sind jedoch die schlechte Aushärtung des Materials (niedriger Martenswert), sowie die schlechten mechanischen Eigenschaften (E-Modul, Festigkeit und Zähigkeit) der Formstoffe.

Aufgabe der Erfindung war deshalb die Entwicklung einer UP-Harzformmasse mit niedrigem Styrolgehalt, die trotzdem vollständig aushärtet und zu Formstoffen mit guten mechanischen Eigenschaften verarbeitet werden kann.

Die Aufgabe wurde erfindungsgemäß gelöst durch Mischen von

A) einem ungesättigten Polyester mit Dihydrodicyclopentadienylendgruppen,

B) dem Umsetzungsprodukt aus 2 Molen Hydroxialkylacrylat oder -methacrylat und einem Mol Diisocyanat,

C) Styrol,

sowie gegebenenfalls

D) weiteren copolymerisationsfähigen Monomeren,

E) üblichen Zusatzstoffen und Hilfsmitteln.

Zu den einzelnen Komponenten ist folgendes zu sagen:

A) Ausgangsmaterial für die Polyester mit Dihydrodicyclopentadienylendgruppen sind ungesättigte Polyester aus ethylenisch ungesättigten Dicarbonsäuren und Diolen. Als ethylenisch ungesättigte Dicarbonsäuren kommen insbesondere Maleinsäure, Fumarsäure, Itaconsäure sowie deren Anhydride in Frage, wobei Maleinsäureanhydrid bevorzugt ist. Daneben können andere Carbonsäuren, wie Adipinsäure, o-Phthalsäureanhydrid, Trimellithsäure, Pyromellithsäure oder deren Anhydride mitverwendet werden.

Geeignete Diole sind z.B. Propylenglykol-1,2, Ethylenglykol, Diethylenglykol, Butandiol-1,3, Butandiol-1,4, Neopentylglykol sowie hydriertes Bisphenol A. Daneben können Polyole, wie Trimethylolpropan, Glyzerin und Pentaerythrit mitverwendet werden. Die Herstellung der ungesättigten Polyester mit Dihydrodicyclopentadienylendgruppen ist bekannt. Der Polyester wird mit Dicyclopentadien bzw. dessen Derivaten oder Substitutionsprodukten modifiziert. Wenn man von Diestern mit hoher Säurezahl oder freier Maleinsäure ausgeht und bei Temperaturen zwischen 120 und 140°C arbeitet, erhält man im wesentlichen eine Addition des Dicyclopentadiens an endständige Carboxyl- bzw. Hydroxylgruppen, wobei sich endständige Dihydrodicyclopentadienylester- oder Dihydrodicyclopentadienylethergruppen bilden.

Das mittlere Molekulargewicht des Polyesters A liegt vorzugweise zwischen 300 und 1 500.

Der Anteil an Komponente A, bezogen auf A + B + C, beträgt 40 bis 70 Gew.%, bevorzugt 45 bis 65 Gew.%.

B) Komponente B ist das Umsetzungsprodukt aus zwei Molen Hydroxialkyl(meth)acrylat und einem Mol eines Diisocyanats. Solche Produkte sind z.B. in der US-PS 3 297 745 beschrieben. Es erweist sich als günstig, die Reaktion in Gegenwart der Komponente C (Styrol) durchzuführen. Die Urethanbildung läßt sich z.B. durch Dibutylzinndilaurat katalysieren.

Eine große Vielfalt von organischen Diisocyanaten, aromatische, aliphatische und cycloaliphatische Diisocyanate, kann für die Reaktion mit Hydroxialkyl(meth)acrylat verwendet werden. Als Beispiel seien genannt: Toluylen-2,6-diisocyanat, Toluylen-2,4-diisocyanat, m-Phenylendiisocyanat, 4,4′-Bisphenylendiisocyanat, 1,5-Naphthylendiisocyanat, 4,4′-Diisocyanatodiphenylmethan, 2,4′-Diisocyanatodiphenylsulfon, 3,3′-Diisocyanatodiphenylsulfon, 4,4'-Diisocyanatodiphenylsulfid, 1,4-Tetramethylendiisocyanat, 1,4-Cyclohexylendiisocyanat, 1,5-Tetrahydronaphthylendiisocyanat.

Hydroxialkyl(meth)acrylate werden durch folgende allgemeine Formel beschrieben:

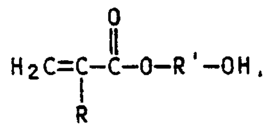

wobei R = H oder $CH_3$ und $R'$ eine $C_2$- bis $C_6$-Alkylengruppe bedeuten. Beispielhaft seien genannt Hydroxiethyl(meth)acrylat, Hydroxipropyl(meth)acrylat, Glycerindi(meth)acrylat, Trimethylolpropandi(meth)-acrylat, Pentaerythrittri(meth)acrylat.

Der Anteil an Komponente B, bezogen auf A + B + C, beträgt 10 bis 40 Gew.%, bevorzugt 15 bis 30 Gew.%.

C) Komponente C ist Styrol. Der Anteil an Styrol, bezogen auf A + B + C, beträgt 1 bis 30 Gew.%, bevorzugt 10 bis 25 Gew.%.

D) Die erfindungsgemäße UP-Harzformulierung kann in untergeordneten Mengen, z.B. 1 bis 20 Gew.%, bezogen auf A + B + C, weitere copolymerisationsfähige Monomere enthalten. Als solche kommen die üblicherweise zum Herstellen ungesättigter Polyesterformmassen verwendeten Allyl- und vorzugsweise Vinylverbindungen in Frage, z.B. Vinylaromaten, wie p-Chlorstyrol oder Vinyltoluol, Ester der Acrylsäure und Methacrylsäure mit 1 bis 18 Kohlenstoffatome enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)-acrylsäureamide, Allylester, wie Diallylphthalat, und Vinylester, wie Ethylhexansäurevinylester, Vinylacetat, Vinylpropionat, Vinylpivalat und andere. Desgleichen eignen sich Gemische der genannten Monomeren.

E) Die Formmassen aus A, B und C können ferner die üblichen Zusatzstoffe, wie Initiatoren, Polymerisationsbeschleuniger, Inhibitoren, Gleitmittel, inerte Lösungsmittel, Füllstoffe, Verstärkungsfasern, Verdickungsmittel und schrumpfmindernde Zusätze enthalten.

Es kommen in Frage:

-Initiatoren, wie Methylethylketonperoxid, Cyclohexanonperoxid, Benzoylperoxid, tert.-Butylperoktoat, tert.-Butylperbenzoat, Dicumylperoxid, Di-tert.-Dibutylperoxid sowie Perketale, Percarbonate, C-C-labile Verbindungen und Azoverbindungen.

-Härtungsbeschleuniger, z.B. Oktoate oder Naphthenate von Kupfer, Blei, Calcium, Magnesium, Cer und insbesondere von Mangan und Kobalt; ferner aromatische Amine, wie Dimethylanilin und Diethylanilin.

-Inhibitoren, wie Hydrochinon, substituierte Hydrochinone, Brenzkatechin, tert.-Butylbrenzkatechin, kernsubstituierte Brenzkatechine, Chinone, wie Benzochinon, Naphthochinon, Chloranilin, Nitrobenzole, wie m-Dinitrobenzol, Thiodiphenylamin, N-Nitrosoverbindungen, wie N-Nitrosodiphenylamin und Salze von N-Nitroso-N-cyclohexylhydroxylamin.

-Gleitmittel, wie Zink-, Magnesium- und Calciumstearat sowie Polyalkylenetherwachse.

-Paraffine zur Verminderung der Monomerenverdunstung und zur Ausbildung einer klebfreien Oberfläche.

-Zumischen von Wasser zur Herstellung einer Harz-Wasseremulsion z.B. als Bindemittel für Fasern oder zur Herstellung von Formteilen, die bis zu 500 Gew.% Wasser enhalten können. Nach dem Verdampfen des Wassers entstehen leichte, holzähnliche Formkörper.

-Füllstoffe, z.B. übliche feinpulvrige oder körnige anorganische -Füllstoffe, wie Kreide, Kaolin, Quarzmehl, Dolomit, Schwerspat, Metallpulver, Aluminiumoxidhydrat, Zement, Talkum, Kieselgur, Holzmehl, Holzspäne, Pigmente. Sie werden in Mengen von 0 bis 800 Gew.%, vorzugsweise 20 bis 150 Gew.%, bezogen auf A + B + C, eingesetzt.

-Verstärkungsfasern, z.B. anorganische oder organische Fasern als Rovings oder flächige, gegebenenfalls daraus gewebte Gebilde, wie Matten, z.B. aus Glas, Kohlenstoff, Asbest, Cellulose und synthetischen organischen Fasern, wie Polycarbonsäureester, Polycarbonate und Polyamide. Die Verstärkungsfasern werden in Mengen von 5 bis 400, vorzugsweise 10 bis 250 Gew.%, bezogen auf A + B + C, eingesetzt.

-Verdickungsmittel, z.B. Oxide oder Hydroxide des Lithiums, Magnesiums, Calciums, Aluminiums oder Titans. Bevorzugt ist Magnesiumoxid. Die Verdickungsmittel werden den Formmassen in Mengen von 0,2 bis 5, vorzugsweise von 0,5 bis 3 Gew.%, bezogen auf A + B + C, zugesetzt.

- Schrumpfmindernde Polymerisate, wie Polystyrol, Polymethylmethacrylat, Polyvinylacetat, Polyethylen, Polybutadien, Polyisopren, Celluloseester, Polyvinylchlorid und entsprechende Copolymere und Pfropfcopolymere. Es eignen sich auch Kondensationspolymere, wie gesättigte Polyester oder Polyesterurethane. Die

schrumpfmindernden Zusätze werden in Mengen von 0 bis 30, vorzugsweise 3 bis 23 Gew.%, bezogen auf A + B + C, eingesetzt.

Die erfindungsgemäßen Formmassen besitzen eine gegenüber Stand-UP-Harzen deutlich verringerte Styrolemission. Sie lassen sich nach üblichen Verfahren z.B. Handlaminieren, Spritzen, Faserspriten, Wickeln, Pressen, Schäumen und Spritzgießen verarbeiten und zu Formteilen mit guten mechanischen Eigenschaften aushärten.

Die in den folgenden Beispielen genannten Teile und Prozente beziehen sich auf das Gewicht. Die Styrolemission wird über den Gewichtsverlust des Harzes pro Fläche und Zeit gemessen. Die Messungen der Glasübergangstemperatur (Tg) erfolgten mit Hilfe der Torsions-Schwingungsanalyse nach DIN 53 445. Biegefestigkeit, Biege-E-Modul und Randfaserdehnung wurden nach DIN 53 452 bestimmt.

Beispiel 1

a) 245 Teile Maleinsäureanhydrid, 363 Teile Dicyclopentadien und 45 Teile Wasser werden unter Rühren und Darüberleiten von Stickstoff auf 135 °C erhitzt und 1 h bei dieser Temperatur gehalten. Nach Zugabe von 85 Teilen Ethylenglykol wird auf 190 °C aufgeheizt und bis Säurezahl 30 weiterkondensiert. 648 Teile des so erhaltenen ungesättigten Polyesters mit mittlerem MG von 500 werden nach Zugabe von 0,085 Teilen Hydrochinon in 170 Teilen Styrol gelöst.

b) 375 Teile Diphenylmethandiisocyanat, 207 Teile Styrol und 0,9 Teile Dibutylzinndilaurat werden im Kolben vorgelegt. Innerhalb von 5 Stunden werden unter Rühren 454 Teile 2-Hydroxipropylmethacrylat hinzugefügt. Dabei soll die Temperatur 50 °C nicht überschreiten.

c) 700 Teile a und 300 Teile b werden gemischt. Das Harz besitzt bei Raumtemperatur eine Viskosität von 800 mPa•s. Es enthält 56 Gew.% der Komponente A, 24 Gew.% der Komponente B und 20 Gew.% Styrol.

Beispiel 2 (Vergleich - übliches UP-Harz)

147 Teile Maleinsäureanhydrid, 296 Teile Phthalsäureanhydrid und 243 Teile Propylenglykol werden unter Rühren und Darüberleiten von Stickstoff innerhalb von 3 Stunden auf 190 °C erhitzt. Die Kondensation wird bis Säurezahl 35 fortgesetzt. 870 Teile des so erhaltenen ungesättigten Polyesters werden nach Zugabe von 0,14 Teilen Hydrochinon bei 120 °C in 470 Teilen Styrol gelöst. Das Harz besitzt bei Raumtemperatur eine Viskosität von 700 mPa•s.

| | Bsp. 1a (Vergleich) | Bsp. 1c | Bsp. 2 (Vergleich) |
|---|---|---|---|
| Styrolemission [g/m²h] | 24 | 24 | 64 |
| Tg [°C] | 110 | 123 | 90 |
| Biege-E-Modul [N/mm²] | 3100 | 3900 | 3800 |
| Biegefestigkeit [N/mm²] | 20 | 94 | 97 |
| Randfaserdehnung [%] | 0,7 | 2,3 | 3,3 |

**Ansprüche**

Härtbare Formmasse aus

A) 40 - 70 Gew.%, bezogen auf A + B + C, eines ungesättigten Polyesters mit Dihydrodicyclopentadienylendgruppen,

B) 10 - 40 Gew.%, bezogen auf A + B + C, des Umsetzungsprodukts aus zwei Molen Hydroxialkyl(meth)acrylat und einem Mol Diisocyanat,

C) 1 - 30 Gew.%, bezogen auf A + B + C, Styrol,

sowie gegebenenfalls

D) weiteren copolymerisationsfähigen Monomeren, und

E) üblichen Zusatzstoffen und Hilfsmitteln.